# EUROPEAN PATENT APPLICATION

(11) **EP 2 091 229 A2**
(43) Date of publication of application: **19.08.2009**
(21) Application number: 08000155.5
(22) Date of filing: 07.01.2008
(51) Int. Cl.: H04N 5/00

(54) **External PC-CARD conditional access module digital television accessory**

(71) Applicant: Massel, Mark Anton, Worplesdon Guildford Surrey GU2 9YP (GB)
(72) Inventor: Massel, Mark Anton, Basingstoke, Hants RG22 6NJ (GB); Guillien-Steinbach, Michel, Basingstoke, Hants RG22 6NJ (GB)

(57) **Abstract**

The Digital Video Broadcast (DVB) PC-CARD interface is normally on a main PCB inside either a Set Top Box (STB) or digital Television (TV). This invention puts the PC-CARD interface outside the STB or TV main chassis or casing, hence making the TV or STB a lower price in the end market. The 'External PC-CARD Conditional Access Module (CAM) digital television accessory' can then be sold by either the STB / TV manufacturer as an add-on product, or it can be bundled (sold with) the Conditional Access card by the encrypted service provider. This invention pushes the additional cost associated with additional services (additional to what is normally transmitted as free programming) to the end user, hence making the basic STB or TV equipment lower cost in the market, thus realizing a more competitive end product.

Note that the PC-CARD interface was formally known as the PCMCIA interface.

## Description

For the sake of brevity, the invention name, as stated above in the title, will be shortened to "***PC-CARD accessory***".

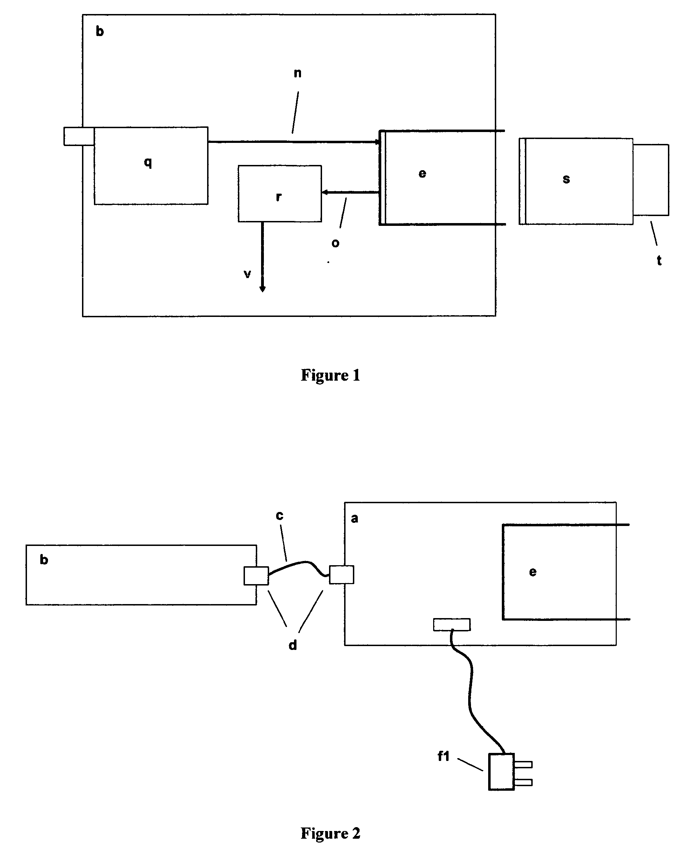

The PC-CARD interface specification has been modified by the Digital Video Broadcast (DVB) group for use in digital television applications. It is published under specification EN50221. In order for a television (TV) or Set Top Box (STB) to be able to decode digital content that is encrypted, a Conditional Access Module (CAM) is plugged into this DVB PC-CARD interface. The digital program stream, known as a Transport Stream (TS), from either a satellite, cable or terrestrial decoder is routed to come into the CAM and out again. If the end user has purchased a smart card (SC), then this plugs into the CAM. The CAM will then enable decoding of the digital program contents. This is shown in Figure 1. Note that the TS is a standard DVB data stream containing information about programming material, and also the video / audio data (either in the clear, ie no encryption, or in encrypted format) and related data such as teletext or program guide. The video data is usually either MPEG-2, H.264 or MPEG-4 compressed.

The DVB PC-CARD interface is normally on a main Printed Circuit Board (PCB) inside either the STB or digital TV. One reason for this is that the interface must be close by the main digital processing electronics to avoid noise and therefore operational problems.

This invention puts the PC-CARD interface outside the STB or TV, hence making the TV or STB a lower price in the end market. The ***PC-CARD accessory*** can then be sold by either the STB / TV manufacturer as an add on item, or it can be bundled (sold with) the Conditional Access card by the encrypted service provider, or any other third party. This invention pushes the additional cost associated with additional services (additional to what is normally transmitted as free programming) to the end user, hence making the basic STB or TV equipment lower cost in the market, thus realizing a more competitive end product.

The invention will now be described solely by way of example and with reference to the accompanying drawings in which:
**Figure 1** shows the typical block diagram of the main electronic components of the digital TV DVB processing as it is today. The complete system is part of a digital TV or STB. Item b is the digital STB or digital TV PCB. Item q is the digital terrestrial, satellite or cable tuner and demodulator electronics. This outputs a digital Transport Stream (TS) which is shown as item n. This feeds into a PC-CARD interface which is shown as item e. The TS is then decrypted inside the Conditional Access Module (CAM), shown as item s, provided that the Smart Card (SC), item t, is plugged in. The decrypted TS is shown coming out of the CAM as item o. This feeds into the main STB or digital TV processor (item r), which after doing the data de-compression / decoding and TV encoding, produces the audio and video signals for output to a TV for display. These signals are illustrated as item v.
**Figure 2** shows an example of how the external connection is made to the ***PC-CARD accessory**,* in this example via a USB 2.0 interface. More STB systems will come into the market with USB interface and so this method of connection to the accessory is considered an important feature of this invention. Item b is again the TV or STB unit. This is shown connecting to the ***PC-CARD accessory,*** item a via the USB cable (Item c). This can be any length, but typically greater than 20cm and less than 200 cm. Items d are the USB 2.0 connections. The PC-CARD interface is shown as item e. The ***PC-CARD accessory*** is also shown to require an external power source: Item fl is an A/C to D/C converter to provide a DC voltage since the USB connection will not be able to supply enough current for the ***PC-CARD accessory*** operation by itself. Note that item c can be replaced by a proprietary interface cable, whence items d then become proprietary connectors.

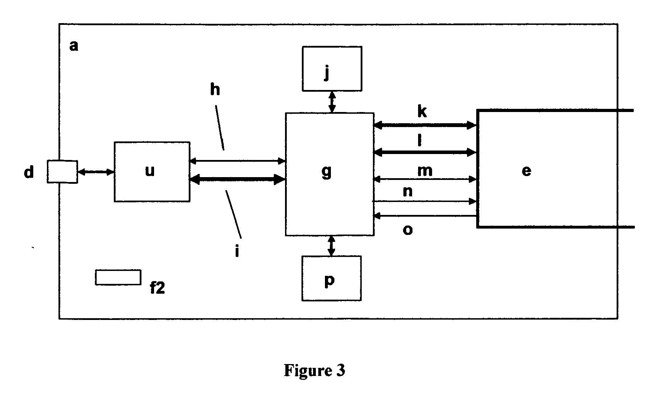

**Figure 3** shows a more detailed block diagram of a USB 2.0 realized ***PC-CARD accessory**,* as will be explained here:

The ***PC-CARD accessory*** is shown again as the main item a. It will be an enclosed PCB. It is realized as a slave device on a standard USB 2.0 interface. The USB interface is shown as item d, connecting to a USB (slave) controller chip shown as item u. This device communicates with a Field Programmable Gate Array (FPGA) device (item g), with control interface signals (item h) and a high speed data port (item i). TS data (suitably formatted) is sent from the digital TV or STB to the USB controller device (item u), where, after some internal buffering and data processing is sent out onto the high speed data port (item i) to the FPGA (Item g). It is then fed, at a fast rate, into a First In First Out (FIFO) memory, shown as item j, before being more slowly fed out into the PC-CARD interface (item e). The communications between the FPGA and the PC-CARD is via the standard DVB specified (EN50221) interface consisting of Data (item k), Address (item 1), and Control (item m) lines. The TS data itself goes to the PC-CARD interface via the TS interface shown as item n. The CAM and SC (not shown in this figure) then perform their normal functions returning decrypted (or clear) audio and video data on the TS output (item o). This output is then again sent to a FIFO memory (item p), at a slow rate, prior to being fed out as a high speed burst of data to the USB 2.0 controller chip (item u), via the high speed data bus (item i). The USB controller chip then sends this data back to the main digital TV or STB microprocessor, where the data is suitably formatted and decoded in the normal way as any normal MPEG-2, H.264 or MPEG-4 compressed stream would be. For completeness the ***PC-CARD accessory*** external power supply input is shown as item f2.

## Claims

1. A DVB specified PC-CARD interface system that is physically, via a high speed electrical interface, a distance in excess of 20 cm away from, and therefore not inside, a set-top-box or digital television that requires it for de-scrambling of digital television content.

2. A DVB specified PC-CARD interface system according to claim 1, in which the electrical interface can be USB2.0 or another proprietary interface that allows the correct electrical functioning at a distance away from the main household equipment.

3. A DVB specified PC-CARD interface system according to claim 1, in which the said system can be purchased separately by an end consumer products purchaser to operate with the main set-top-box or digital television, by simply plugging it into either the USB2.0 interface or the proprietary interface of the set-top-box or digital television unit.
